# EUROPEAN PATENT APPLICATION

(11) **EP 2 833 256 A1**
(43) Date of publication of application: **04.02.2015**
(21) Application number: 14177963.7
(22) Date of filing: 22.07.2014
(51) Int. Cl.: G06F 3/14, G09G 5/22, G05B 19/05

(54) **Image creation system for a network comprising a programmable logic controller**

(30) Priority: 29.07.2013 JP 2013157126
(71) Applicant: Digital Electronics Corporation, Osaka 541-0041 (JP)
(72) Inventor: Ito, Takako, Osaka, 541-0041 (JP); Howard, Kevin, Osaka, 541-0041 (JP)
(74) Representative: Cabinet Plasseraud

(57) **Abstract**

An image creation system (1) which creates image data of an image to be displayed by a display section of a programmable display device (3) includes the programmable display device and a Personal Computer (2). When a user conducts an operation by use of a mouse (27) etc., an image creation operating section of the PC creates operation data indicative of content of the operation. A data transmission and reception section (211) of the PC transmits, to the programmable display device, the operation data whose data format is compatible with the programmable display device. A control section (31) of the programmable display device causes the programmable display device to draw the image in accordance with the operation data received by the programmable display device.

## Description

### Technical Field

The present invention relates to an image creation system which creates an image to be displayed by an operating and display device, the image having an operation function and including various objects to be displayed.

### Background Art

A programmable display device includes (i) a display section which displays an image, (ii) a touch panel which receives a touch input, (iii) an interface via which the programmable display device communicates with an apparatus connected to the programmable display device, and (iv) a control section which controls the display section, the touch panel, and the interface. The programmable display device is an operating and display device functions to (i) show an operating status of an apparatus in an image displayed by the display section and (ii) receive, via the touch panel on the display section, an operation input for giving a control instruction to an apparatus. Some industrial computers have functions similar to the above functions of the programmable display device. Such industrial computers are often employed as an operating and display device.

An image to be displayed by the operating and display device is created in the form of image data which serves as an application program for causing the operating and display device to realize an operation function and a display function. Such an image can be created by a user himself/herself by use of image creation software. The image creation software normally includes an image creation tool for creating an image, and an image transfer tool. The image creation tool provides a user with functions such as (i) a component image creating function of creating an image of a component such as a switch, a numeric keypad, a meter indicator, or a graph indicator, (ii) a diagram creating function of creating various diagrams, and (iii) a simulation function. These functions support user's creation of an image. The image transfer tool (i) converts, into a file format executable by a runtime of the operating and display device, a file format of a file (image file) of image data created by the image creation tool, and then (ii) transfers, to the operating and display device, the file whose file format has been converted.

The following operations are required from creating an image by use of the image creation software to putting the operating and display device which is displaying the image into operation.

First, an image is created by use of the image creation tool, and then whether or not the created image can be operated and displayed as originally designed is checked by means of the simulation function. The image transfer tool converts a file format of an image file of a completed image into a file format executable by the runtime of the operating and display device, and then transfers, to the operating and display device, the image file whose file format has been converted. Upon reception of the image file, the operating and display device stores the image file in a memory which stores image data. When the operating and display device is put into operation, the operating and display device reads the image file to display the image.

The image file thus stored in the operating and display device is subjected to an operation test which tests whether or not the operating and display device can operate and display the image in accordance with image data of the image file as originally designed. The operation test is carried out while the operating and display device is being connected to various apparatuses, as with a case where the operating and display device is put into operation while the operating and display device is being connected to various apparatuses. When it is found through the operation test that the operating and display device cannot operate and display the image as originally designed, a defect of the image data is modified by use of the image creation software, and then the image data is transferred to the operating and display device. In contrast, when it is found through the operation test that the operating and display device can operate and display the image in accordance with the image data as originally designed, the operating and display device which is displaying the image is put into operation. Such a series of operations are repeated until it is found through the operation test that the operating and display device can operate and display the image as originally designed.

The simulation function of the image creation software runs a simulation as if the operating and display device operates and displays the image in accordance with the image data. However, since a resolution of a display section of a personal computer (PC) on which the image creation software is installed is different from that of the display section of the operating and display device, an image displayed by the display section of the personal computer is different in display size from that displayed by the display section of the operating and display device, though these images are based on identical image data.

In order to create image data while preventing occurrence of such a defect, it is normally necessary to determine the size of an object (a component image or a diagram) in consideration of the resolutions of the respective display sections of the PC and the operating and display device. For example, an image creator understands in advance a difference in resolution between the display section of the PC and the display section of the operating and display device, and then makes a fine adjustment to each size of the images of the object in consideration of how large or small the image displayed by the display section of the PC is displayed by the display section of the operating and display device.

Patent Literature 1 discloses a PC which displays an image in a size in which an operating and display device displays the image so as to prevent occurrence of such a defect. Specifically, according to a method disclosed in Patent Literature 1, an enlargement ratio or a reduction ratio of an image to be displayed by a display section of the PC is calculated on the basis of information on screens of the respective display sections of the PC and the operating and display device, and the display section of the PC displays the image at the enlargement ratio or the reduction ratio.

### Citation List

### Patent Literature

Patent Literature 1
Japanese Patent Application Publication, Tokukai, No. 2010-218533 A (Publication Date: September 30, 2010)

### Summary of Invention

### Technical Problem

However, the method disclosed in Patent Literature 1 does not take into consideration a difference in drawing ability between the PC and the operating and display device. Such a difference is caused due to a difference in platform between the PC and the operating and display device. It is therefore difficult for a display state of the screen of the display section of the PC to become totally identical to that of the screen of the display section of the operating and display device, even if the PC and the operating and display device can display respective images substantially equal in size to each other. Generally, a PC has an excellent graphic performance, and can therefore express an image variously. In contrast, an operating and display device (particularly, a programmable display device) has a poor graphic performance. Therefore, the operating and display device cannot express a diagram, a color, etc. as variously as the PC can.

In an operation test, the operating and display device can check a communication with an external device such as a programmable logic controller (PLC) in a state where the operating and display device is being connected to the external device. In the operation test, the operating and display device further can check how the operating and display device outputs an audio output and how the operating and display device displays an externally-supplied image. In contrast, in a simulation run by the PC, the PC can neither check a communication with an external device nor output a sound and an image.

Therefore, it cannot be said that the simulation run by the PC sufficiently expresses an operation state of the operating and display device.

According to the method disclosed in Patent Literature 1, the PC should convert a file format of an image file, and then should transfer, to the operating and display device, the image file whose file format has been converted. Therefore, in a case where the PC has to transfer a plurality of image data files to the operating and display device, the PC requires a great deal of time to transfer these image data files. For example, for a manufacturing line including a plurality of processes, a plurality of images related to the plurality of processes are created. Moreover, when the operating and display device finds a defect of image data through an operation test, the PC should modify the image data, convert a file format of the modified image data, and then transfer, to the operating and display device, an image file whose file format has been converted. Since the method disclosed in Patent Literature 1 thus requires conversion of a file format of an image file and transfer of the image file, it takes a great deal of time from creating an image to putting the operating and display device into operation.

The present invention was made in view of the problems, and an object of the present invention is to shorten a time period required from creating an image to putting an operating and display device into operation.

### Solution to Problem

In order to attain the object, an image creation system of an aspect of the present invention is configured to include an operating device and an operating and display device and to create image data of an image to be displayed by the operating and display device, the operating device including: an operation data creating section which, when an operation is conducted, creates operation data indicative of content of the operation; and a data transmission section which transmits, to the operating and display device, the operation data whose data format is compatible with the operating and display device, and the operating and display device including a control section which causes the operating and display device to draw the image in accordance with the operation data received by the operating and display device.

### Advantageous Effects of Invention

According to the image creation system of the present invention, it is possible to cause an image creator to feel as if image data of an image which is being displayed on a screen of the operating and display device is edited by the operating and display device, though the operating device and the operating and display device operate independently. In addition, since the operating and display device creates image data, the operating and display device can run a simulation and check a state where a programmable display device is actually used. It is therefore possible to bring a special effect of shortening a time period required from creating an image to putting the operating and display device into operation.

### Brief Description of Drawings

Fig. 1 is a block diagram illustrating a configuration of an image creation system in accordance with Embodiment 1 of the present invention.
Fig. 2 is a view illustrating a connection configuration of a personal computer and a programmable display device which are included in the/an image creation system in accordance with Embodiment 1 or 2 of the present invention.
Fig. 3 is a view illustrating an image creation operation window to be displayed by the personal computer of the image creation system in accordance with Embodiment 1 or 2 of the present invention.
   (a) and (b) of Fig. 4 are views illustrating an image which is being created and which is to be displayed by the programmable display device of the image creation system in accordance with Embodiment 2 of the present invention.
Fig. 5 is a block diagram illustrating a configuration of the image creation system in accordance with Embodiment 2 of the present invention.

### Description of Embodiments

The following description will discuss in detail Embodiments of the present invention.

### [Embodiment 1]

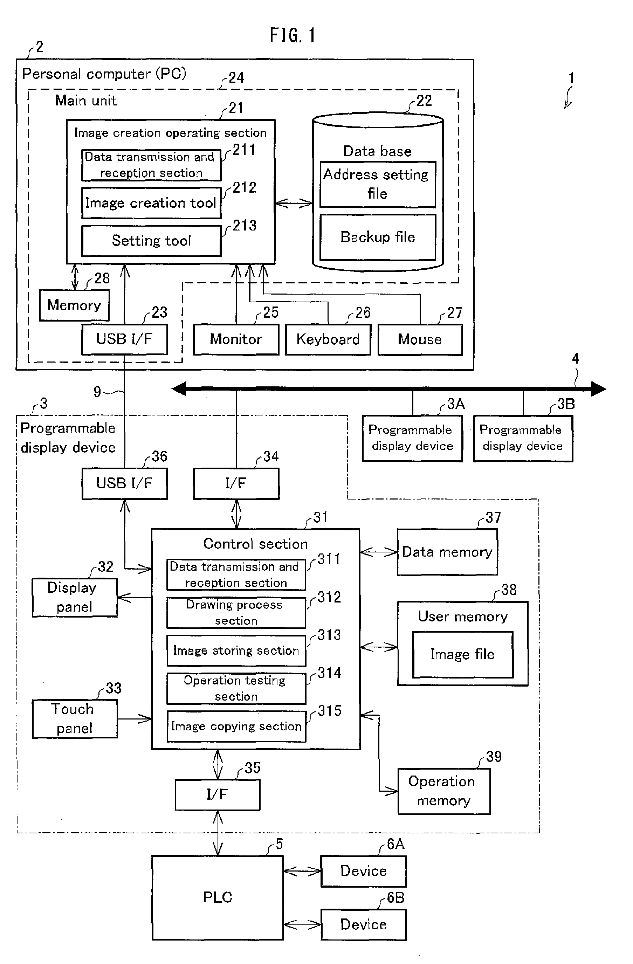

Embodiment 1 of the present invention will be described below with reference to Figs. 1 through 3.

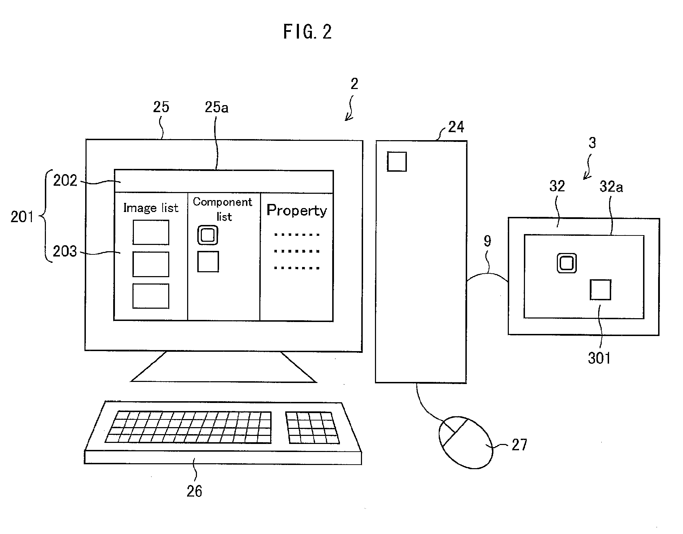

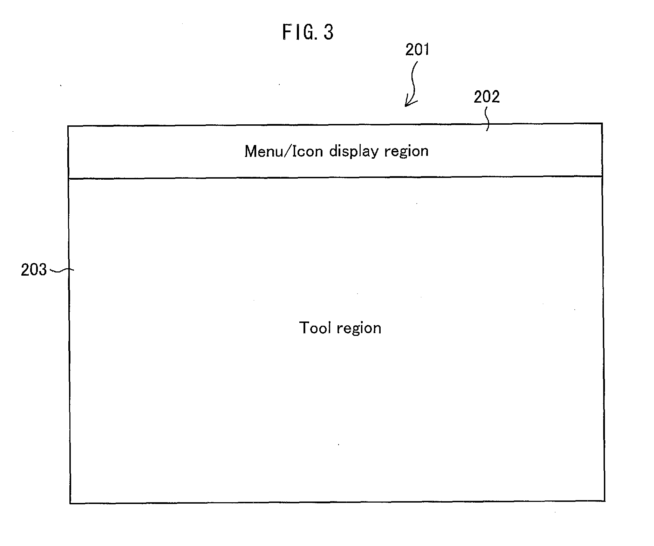

Fig. 1 is a block diagram illustrating a configuration of an image creation system 1 in accordance with Embodiment 1. Fig. 2 is a view illustrating a connection configuration of a personal computer 2 and a programmable display device 3 which are included in the image creation system 1. Fig. 3 is a view illustrating an image creation operation window 201 to be displayed by the personal computer 2 of the image creation system 1.

As illustrated in Fig. 1, the image creation system 1 includes (i) the personal computer (hereinafter abbreviated to "PC") 2 (operating device), (ii) the programmable display device 3 (operating and display device) connected to the PC 2 via a USB cable 9, and (iii) a network 4 to which the programmable display device 3 is connected.

The programmable display device 3 is connected via a communication cable to a programmable logic controller (PLC) 5 which serves as an external device, so that the programmable display device 3 communicates with the PLC 5.

In addition to the programmable display device 3, a programmable display device 3A and a programmable display device 3B are also connected to the network 4.

The PLC 5 will be described below.

The PLC 5 is provided with an input unit and an output unit. The input unit is connected to a device 6A, and the output unit is connected to a device 6B. This configuration enables the PLC 5 to be notified of a state of the device 6A via the input unit and to give a control instruction to the device 6B via the output unit. The PLC 5 conducts the above operations every predetermined scan time according to a sequence program (e.g., a ladder program) created by a user.

Examples of the device 6A include a sensor (such as a temperature sensor or an optical sensor) and a switch (such as a push button switch, a limit switch or a pressure switch). Examples of the device 6B include an actuator, a relay, an electromagnetic valve, and an indicator. These devices 6A and 6B are provided in necessary sections of various target systems in a manufacturing line etc., and serve as part of a control system.

The PLC 5 is further provided with a memory which stores data. The memory stores, in a memory region specified by a device address, data (word data or bit data) indicative of states of the devices 6A and 6B (an output value of which the device 6A notifies the PLC 5, and a setting value which is set with respect to the device 6B). The memory includes a word device and a bit device. The word device serves as a memory region for storing word data such as numeric data to be inputted or outputted. The word device is specified by a word address (device address). The bit device serves as a region for storing bit data indicative of, for example, an ON/OFF state. The bit device is specified by a bit address (device address). Such a configuration makes it possible for the PLC 5 to extract each piece of information on the state of the device 6A and to control the device 6B, merely by (i) specifying a given word device or bit device in the memory by a corresponding device address and (ii) accessing the specified word device or bit device.

Note that, in the present embodiment, the memory region specified by the device address is called an external memory device, and the device address is called an external address, in contrast, a data storage region of, for example, a data memory 37 (later described) in the programmable display device 3 is called an internal memory device, and an address which specifies the internal memory device is called an internal address.

The following description will discuss the PC 2 in detail.

As illustrated in Fig. 2, the PC 2 includes a main unit 24, a monitor 25, a keyboard 26, and a mouse 27. The monitor 25 has a display surface 25a.

The PC 2 communicates with the programmable display device 3 via the USB cable 9. The main unit 24 of the PC 2, illustrated in Fig. 1, includes a CPU, a memory (e.g., a RAM and a ROM), and a storage unit (a hard disc drive and/or a solid state drive (SSD)). The PC 2 also includes an image creation operating section 21, a data base 22, a USB interface 23 ("USB I/F" in Fig. 1), and a memory 28.

The image creation operating section 21 includes a data transmission and reception section 211, an image creation tool 212, and a setting tool 213 so as to create and edit an image to be displayed by the programmable display device 3. The PC 2 can serve as an operating device by including the image creation operating section 21. Functions of the image creation operating section 21 are carried out by the CPU executing an application program.

As illustrated in Fig. 2, the image creation operating section 21 causes the display surface 25a of the monitor 25 to display an image creation operation window 201 illustrated in Fig. 3. The image creation operation window 201 has a menu/icon display region 202 and a tool region 203.

The menu/icon display region 202 is provided in an upper part of the image creation operation window 201. In the menu/icon display region 202 are displayed (i) a menu bar including various menus for operation, and (ii) a tool bar including various commands and component images, which are represented by respective icons.

The tool region 203 is a region where a window which displays various pieces of information is to be displayed. The tool region 203 is provided below the menu/icon display region 202 in the image creation operation window 201. Examples of the window include (i) an image list window which displays thumbnail images of created images that are stored in the programmable display device 3, (ii) a property window which displays an attribute of a diagram or a component image (later described), (iii) a component image window which displays a list of pre-registered component images, and (iv) an address setting window which displays a setting state of an address set by the setting tool 213.

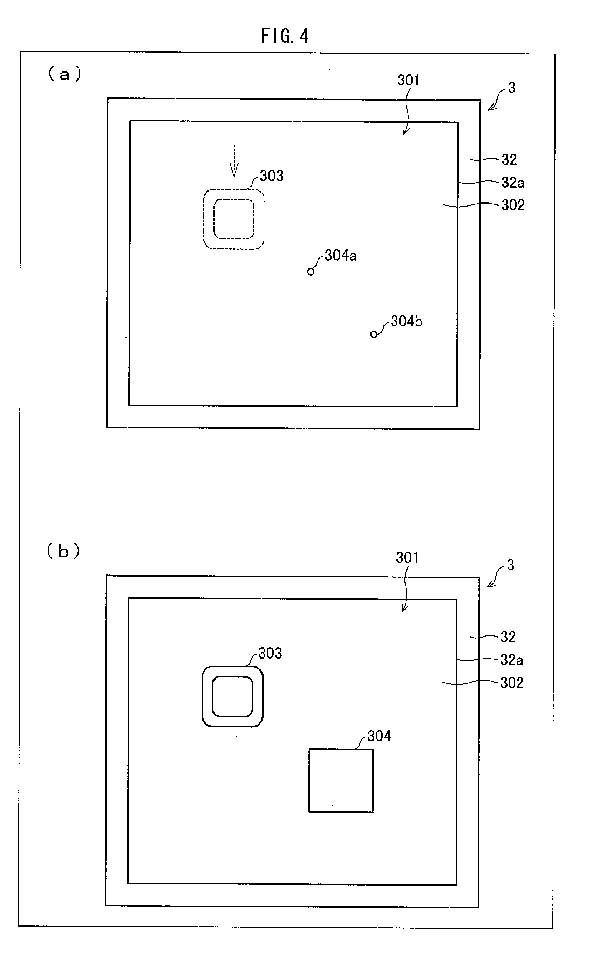

Conventional image creation software causes a monitor of a personal computer to display an image creation window in which an image creation region to display an image to be created is provided in a region corresponding to part of a tool region 203. Such a conventional image creation window displays, in the image creation region, a base image having a function similar to that of a base image 302 (later described) illustrated in Fig. 4. That is, the base image occupies at least part of the whole region of the image creation window. This narrows a region of the whole region of the image creation window which region is occupied by a menu/icon display region 202. Therefore, only part of each of the above-described windows to be displayed in the tool region 203 can be displayed in the tool region 203, and such part of the each of the above-described windows is selectively displayed.

On the other hand, according to the image creation system 1 of the present embodiment, an image to be created, i.e., the base image 302 is displayed by the programmable display device 3. Therefore, the image creation operation window 201 does not have such an image creation region, and therefore can provide a large tool region 203. This allows much more windows to be displayed in the tool region 203.

The image creation tool 212 has a diagram creation function, a component image creation function, a text creation function, an edit function, and a command function. By use of these functions, the image creation tool 212 creates an image to be operated and displayed by the programmable display device 3. A user conducts, by means of the above functions of the image creation tool 212, an operation for creating an object on a base image to be displayed by the programmable display device 3.

The diagram creation function functions to create a diagram such as a dot, a straight line, a circle, or various polygons typified by a quadrangle. By use of the diagram creation function, the image creation tool 212 (i) places a diagram, which has been selected through an operation for specifying the diagram, at a desired location on a base image which is being displayed by the programmable display device 3, and (ii) paints over the diagram with a designated color, and/or (iii) draws a pattern in the diagram. Examples of the operation for specifying the diagram include (i) an operation for clicking an icon indicative of the diagram which icon is displayed in the menu/icon display region 202, (ii) an operation for selecting the diagram from a menu displayed in the menu/icon display region 202, and (iii) an operation for pointing a characteristic (e.g., an apex) of the diagram.

By use of the diagram creation function, the image creation tool 212 determines a display change style in which a display state of a diagram is changed. Examples of the display change style include (i) ON/OFF display in which a color etc. of a diagram is changed depending on ON/OFF of a value of the bit address, (ii) state display in which a diagram which has been changed in accordance with data of the word address is displayed, and (iii) shift display in which a diagram is shifted in accordance with coordinate data of the word address.

The component image creation function functions to create a component image of a component having a specific function. By use of the component image creation function, the image creation tool 212 places, on the base image, a component image selected through an operation for specifying the component image. Examples of the operation for specifying the component image include (i) an operation for clicking an icon indicative of the component image which icon is displayed in the menu/icon display region 202, and (ii) an operation for dragging and dropping one of a plurality of component images which are being displayed by the component image window in the tool region 203.

Examples of the component image include images of a switch (such as an ON/OFF switch, a change-over switch, or a push button switch), a lamp, a numeric keypad, and various display components (such as a numeric value display component, a meter display component, a graph display component, and an alarm display component). Such images are prepared in advance. To each component image is given in advance process specifying information corresponding to a function of the each component image (a procedure for an object). This makes it possible to change a display state of a switch in response to an operation or to change a display state of a lamp in accordance with data.

The text creation function functions to provide a text entry frame onto the base image and to draw a text entered in the text entry frame. By use of the text creation function, the image creation tool 212 determines, in response to an operation of an Enter key, a text which has been entered by use of a keypad displayed on the base image.

The PC 2 creates operation data through the above operations that are carried out by the image creation tool 212 by use of the diagram creation function, the component image creation function, and the text creation function.

Operation data can be image data of an image itself which can be displayed by the programmable display device 3 and which is obtained when operations are completed. Cursor motion, double-clicking, etc. carried out by the mouse 27 of the PC 2 should be reflected on the base image 302 displayed by the programmable display device 3. The PC 2 converts, into data which can be recognized by the programmable display device 3, operation data for reflecting these operations (such as a click operation, and a coordinate position at which a click operation is conducted) on the base image 302 displayed by the programmable display device 3. The PC 2 then transmits, to the programmable display device 3, the data into which the operation data has been converted.

As such, operation data is classified into (i) image data of an image displayed by the programmable display device 3, i.e., operation data for an image and (ii) operation data for an instruction, an order, or a coordinate which can be recognized by the programmable display device 3, i.e., operation data for a command.

Examples of operation data for an image include image data to be transmitted as operation data for an image from PC 2 to the programmable display device 3, the image data having been created by operations in PC 2.

What is meant by operation data for a command is operation data created by an operation for giving the programmable display device 3 a command that includes a command regarding an operation of the programmable display device 3. Such operation data for a command are indicative of (i) coordinates specified by an operation conducted by the mouse 27 of the PC 2, (ii) an operation such as a click or a double click at the coordinates, (iii) storage or read-out of an image file by the programmable display device 3 in response to a click or a double click, or (iv) a start or end of drawing of an image. The operation data is transmitted from the PC 2 to the programmable display device 3 in a data format which can be recognized by the programmable display device 3. That is, the PC 2 does not create an image in accordance with operation data for a command, but the programmable display device 3, which has received the operation data for the command, carries out a process according to the command.

Note that whether the PC 2 creates operation data for an image or operation data for a command in response to one operation conducted in the PC 2 can be determined as appropriate.

For example, in a case where the programmable display device 3 has a poor processing ability, it is recommended that a ratio of operation data for an image to all pieces of operation data be increased so that the PC 2 carries out more processes. In this case, it is preferable that the data transmission and reception section 211 intermittently transmits operation data for a command to the programmable display device 3.

In a case of a low communication speed, it is recommended that a ratio of operation data for a command to all pieces of operation data be increased so that amount of data to be transmitted is reduced. This is because data amount of operation data for a command is smaller than that of operation data for an image.

There is a case where it is necessary to specify coordinates on image data displayed by the programmable display device 3 in order to create operation data. In this case, the memory 28 of the PC 2 is used. The memory 28 has a region to which an address corresponding to each coordinate position on a display surface 32a of the programmable display device 3 which is connected via the USB cable 9 is given so that the memory 28 can store data of a cursor of the mouse 27. The memory 28 is used to specify a position on the display surface 32a by use of the mouse 27 of the PC 2. That is, in a case where the cursor of the mouse 27 is not present on the display surface 25a of the PC 2, it is determined that the cursor of the mouse 27 is present at a coordinate position corresponding to the region of the memory 28 via a corresponding address. As such, it is possible to virtually specify the coordinates on the display surface 32a of the programmable display device 3. That is, the memory 28 is used to load the coordinates on the display surface 32a of the programmable display device 3 which coordinates are contained in operation data for an operation. Note that the memory 28 further has a region in which operation data for an image, the operation data having been created by operations, is loaded. This region will be described later.

The edit function functions to edit a diagram, a component image, or a text. Specifically, the edit function functions to conduct an edit process, such as a shift, a cut and a paste, a copy, a deletion, a scale-up or a scale-down, or a change in attribute, with respect to an object (a diagram, a component image, or a text) placed on a base image. By use of the edit function, the image creation tool 212 conducts an edit process specified by an operation for specifying the edit process. Examples of the operation for specifying the edit process include (i) an operation for dragging and dropping the object and (ii) an operation for clicking an icon provided for a corresponding edit process. Each edit process is specified by a corresponding operation for specifying the each edit process. By use of the edit function, the image creation tool 212 creates operation data of such an operation for specifying an edit process.

The command function functions to create command data of various commands to be given to the programmable display device 3. By use of the command function, the image creation tool 212 creates command data of a command in response to a user's operation for entering the command. Examples of the command data include storage instruction data, termination instruction data, thumbnail transmission instruction data, and reading instruction data (all of which will be described below).

Storage instruction data is data for instructing the programmable display device 3 to store an image drawn by the programmable display device 3. Termination instruction data is data for instructing the programmable display device 3 to terminate an image creating process.

Thumbnail transmission instruction data is data for instructing the programmable display device 3 to transmit, to the PC 2, thumbnail images of a plurality of images that are stored in the programmable display device 3. Image data stored in the programmable display device 3 is displayed in the form of a thumbnail image by an image list window on the monitor 25 of the PC 2. The image creation tool 212 receives a thumbnail image from the programmable display device 3, and causes the monitor 25 to display the thumbnail image.

Reading instruction data is data for, in a case where an image is created or edited based on a created image which is stored in a user memory 38 (later described) of the programmable display device 3, instructing the programmable display device 3 to (i) read the created image from the user memory 38 and then (ii) display the read image. The image creation tool 212 creates reading instruction data for the programmable display device 3 so that the programmable display device 3 displays an image corresponding to a thumbnail image selected from a plurality of thumbnail images displayed by the image list window.

According to the present embodiment, these pieces of command data are employed as operation data for a command.

In response to a user's operation carried out by use of an input device (such as the keyboard 26 or the mouse 27) of the PC 2, the image creation tool 212 (operation data creating section) creates image data by use of the diagram creation function, the component image creation function, the text creation function, the edit function, and the command function. Specifically, the image creation tool 212 creates image data by (i) creating data of an object (object data) by use of the diagram creation function, the component image creation function, the text creation function, and the edit function and (ii) adding the object data to data of a base image (base image data). The image data, which has been created in the PC 2, is converted into operation data for an image which can be recognized by the programmable display device 3. The operation data for the image is then transmitted, i.e., transferred to the programmable display device 3. In a case where the image creation tool 212 creates operation date for an image, the image creation tool 212 instructs the data transmission and reception section 211 to transmit the operation data for the image to the programmable display device 3. In a case where the image creation tool 212 creates operation date for a command, the image creation tool 212 instructs the data transmission and reception section 211 to transmit the operation data for the command to the programmable display device 3.

It is preferable sequentially transit operation data for an image so as to smoothly and accurately change the image which is being displayed by the programmable display device 3. However, operation data for an image may be transmitted at the following timings, in a case where the PC 2 and the programmable display device 3 communicate with each other at a low communication speed or in a case where the programmable display device 3 has a poor drawing performance.

That is, the data transmission and reception section 211 (later described) may transmit operation data for an image or a command to the programmable display device 3 at predetermined time intervals or when a trigger occurs. Examples of the trigger include (i) update of operation data for an image for which new object data is created and (ii) creation of new operation data for a command. However, the trigger is not limited to these.

The setting tool 213 causes a database 22 to store an address setting file indicative of a correspondence relationship (correspondence) between an object and a combination of an address with a symbol name given to the address. The setting tool 213 instructs the data transmission and reception section 211 to transmit the address setting file to the programmable display device 3. Data of the address setting file stored in the database 22 can be seen in the above-described address setting window.

The setting tool 213 conducts various apparatus settings such as settings of the model of the programmable display device 3, the model of the PLC 5, and the model of another apparatus connected to the programmable display device 3 so that the programmable display device 3 operates in accordance with operation data created by the PC 2 The setting tool 213 creates apparatus setting data by conducting such apparatus settings. The setting tool 213 instructs the data transmission and reception section 211 to transmit the apparatus setting data to the programmable display device 3. Note that timing at which apparatus setting data is transmitted to the programmable display device 3 is determined in the same manner as the above-described timing at which operation data for an image or a command is transmitted to the programmable display device 3.

The data transmission and reception section 211 (data transmission section) includes a device driver which recognizes as a device an external display device which is connected to the PC 2 via the USB cable 9. The device driver of the data transmission and reception section 211 recognizes the programmable display device 3 as a USB connectable device, and establishes a packet communication with the programmable display device 3 according to a predetermined protocol. This enables the programmable display device 3 to function as the external display device of the PC 2.

Upon reception of an instruction from the image creation tool 212, the data transmission and reception section 211 transmits, to the programmable display device 3, (i) operation data for an image which operation data has been created by the image creation tool 212 or (ii) operation data for a command which operation data has been created by the image creation tool 212. Upon reception of an instruction from the setting tool 213, the data transmission and reception section 211 transmits, to the programmable display device 3, address setting data which has been created by the setting tool 213 or the apparatus setting data which has been created by the setting tool 213.

The data transmission and reception section 211 receives an image file transmitted from the programmable display device 3, and causes the database 22 to store the image file as a backup file.

The database 22 is stored in the storage unit. The database 22 contains the backup file and the address setting file that has been created by the setting tool 213. The backup file is a file which is backed up by uploading, from the programmable display device 3, an image file stored in the programmable display device 3 (later described).

The USB interface 23 is a communication control section for controlling communication with the programmable display device 3 via the USB cable 9.

Note that communication between the PC 2 and the programmable display device 3 is not limited to serial communication via the USB cable 9. Note, however, that, since a USB interface function which each of the PC 2 and the programmable display device 3 normally has is used, it is preferable that the PC 2 establishes serial communication with the programmable display device 3 via the USB cable 9.

The following description will discuss the programmable display device 3.

The programmable display device 3 is a dedicated-purpose computer which realizes an operation function and a display function which are specific to a programmable display device, by displaying an image to be operated and displayed, the image having the operation function and including various objects to be displayed. The programmable display device 3 is suitably employed as an HMI (Human Machine Interface) apparatus. The programmable display device 3 has the display surface 32a which serves as a display part of a display panel 32. Image data for displaying the image is created by combining objects each having process specifying information which specifies various processes for display and operation. The programmable display device 3 can specify, in accordance with such image data, an operation for displaying the state of the device 6A or an operation for controlling the state of the device 6B in response to an operation to a touch panel 33 (later described).

The programmable display device 3 uses a communication function to communicate with the PLC 5 via a communication cable so as to obtain, as sampling data, data on the state of the device 6A which data is stored in a device memory of the PLC 5. The programmable display device 3 displays the state of the device 6A on the display panel 32 (later described). The programmable display device 3 uses the communication function to transmit, to the PLC 5 in response to an operation to the touch panel 33, for example, a control instruction for changing the state of the device 6B. The programmable display device 3 is further communicably connected to the programmable display devices 3A and 3B (external devices) via a network 4. The programmable display device 3 uses the communication function to transmit or receive data to/from the programmable display devices 3A and 3B.

The network 4 to which the programmable display device 3 is connected is a communication network established within a certain range. Examples of the communication network include a Local Area Network (LAN) and the Intranet, via which communication can be established according to identical communications protocols.

In order to carry out the above-described functions, the programmable display device 3 includes a control section 31, the display panel 32, the touch panel 33, interfaces ("I/F" in Fig. 1) 34 and 35, a USB interface ("USB I/F") 36, the data memory 37, the user memory 38, and an operation memory 39. The following description will discuss in detail these main components of the programmable display device 3.

In order to have a reduced thickness, the programmable display device 3 suitably employs, as the display panel 32 (display section), a flat display panel such as a liquid crystal panel, an EL panel, or a plasma display panel. The touch panel 33 is an input device which is provided so as to receive a user's touch on the display surface of the display panel 32. Examples of the input device includes input devices which employ various methods such as a matrix switch method, a resistive film method, a surface acoustic wave method, an infrared method, an electromagnetic induction method, and an electrostatic capacitance method. Such input devices can be suitably employed as the touch panel 33.

The interface 34 is a communication control section for controlling communication of the programmable display device 3 via the network 4. The interface 34 is configured to establish a network communication based on an IP address of the programmable display device 3.

The interface 35 is a communication control section for controlling communication of the programmable display device 3 with the PLC 5. The interface 35 is configured to (i) conduct a serial communication control in a case where the PLC 5 establishes a serial communication and (ii) conduct a network communication control in a case where the PLC 5 establishes a network communication. In a case where the interface 35 conducts a serial communication control, the interface 35 establishes a communication according to a communication protocol compatible with a manufacturer of the PLC 5 or the model of the PLC 5.

The USB interface 36 is a communication control section for controlling communication with the PC 2 via the USB cable 9. Operation data is transmitted via the USB cable 9.

The data memory 37 includes an SRAM and/or a DRAM. The data memory 37 stores various pieces of data created (i) outside of the programmable display device 3 (i.e., in the PLC 5 or in a controller such as a temperature controller or an inverter (not illustrated)) and (ii) inside of the programmable display device 3. Since the data memory 37 stores such different kinds of data, the data memory 37 is not necessarily a single memory, but preferably includes as many different kinds of memories as the different kinds of data or preferably has as many different memory regions as the different kinds of data.

The user memory 38 (image memory) stores an image file etc. A FEPROM (Flash Erasable and Programmable ROM) is employed as the user memory 38. The FEPROM is a rewritable read-only flash memory. Therefore, the user memory 38 serves as a hard disk drive of a typical personal computer. A flash memory does not have any moving parts, and is resistant to impact, and therefore stably operates even in a bad environment.

An image file is a file which contains data of at least one image (a unit image based on image data corresponding to one frame) to be displayed by the programmable display device 3. The image file is normally created as an integrated file which contains a group of a series of related pieces of image data for, for example, (i) a target system including the devices 6A and 6B or (ii) a product manufactured by use of the target system. The image file is created by a drawing process section 312 (described later). The drawing process section 312 creates an image file by use of the image creation operating section 21, and an image storing section 313 (described later) causes the user memory 38 to store the image file.

The operation memory 39 includes, for example, a DRAM. The operation memory 39 is used not only in a case where a calculation process to be carried out for display control etc. is carried out but also to temporarily store data to be exchanged with the PLC 5. The operation memory 39 has a specific region (the aforementioned internal memory device) which stores data created in the programmable display device 3, such as data created as a result of a user's operation.

The control section 31 communicates with the PLC 5 at predetermined time intervals or every predetermined event so as to obtain, as state data, from the memory (the external memory device) of the PLC 5, data on the state of the device 6A connected to the PLC 5. The control section 31 controls the data memory 37 to store the data on the state of the device 6A. The control section 31 also communicates with the PLC 5 so as to control data stored in the external memory device to be rewritten so that the data is updated in response to, for example, an operation to the touch panel 33. The control section 31 rewrites data stored in the internal memory device so that the data is updated in accordance with, for example, an operation to the touch panel 33.

The control section 31 specifies, on the basis of process specifying information contained in a component image, an operation for reflecting, in a display state of an object (the component image), state data of the device 6A which state data is obtained from the PLC 5. The control section 31 also specifies, on the basis of the process specifying information, an operation for instructing the PLC 5 to change the state of the device 6B in response to an operation to the object.

The control section 31 is a component of the image creation system 1, and includes a data transmission and reception section 311, the drawing process section 312, the image storing section 313, an operation testing section 314, and an image copying section 315.

The above-described functions of the control section 31 are carried out by a CPU of the programmable display device 3 which CPU executes a control program.

The data transmission and reception section 311 is a reception process section which receives various pieces of data (mainly, operation data in the present embodiment) transmitted from the data transmission and reception section 211 of the PC 2. The data transmission and reception section 311 includes a device driver, as with the data transmission and reception section 211. The device driver of the data transmission and reception section 311 receives such various pieces of data according to a dedicated protocol.

The data transmission and reception section 311 transmits, as a backup file, to another programmable display device and/or the PC 2, an image file read from the user memory 38 by the image copying section 315 (later described). The data transmission and reception section 311 transmits, to the PC 2, a thumbnail image read from the image storing section 313 (later described).

The drawing process section 312 draws an image on the display surface 32a of the PC 2 in accordance with the operation data received by the data transmission and reception section 311. The drawing process section 312, for example, analyzes data of an object to be added to image data of an image which is being displayed by the programmable display device 3, and then conducts a process of drawing the object on the image.

In a case where the image creation tool 212 creates or edits an image in accordance with image data which has been already stored in an image file, the drawing process section 312 (i) reads, from the user memory 38, image data specified by reading instruction data (command data) created by the image creation tool 212, and (ii) draws an image on the display panel 32 in accordance with the read image data. In this case, the drawing process section 312 further instructs the data transmission and reception section 311 to transmit the image data to the PC 2. This is because the PC 2 does not have the image data.

The drawing process section 312 causes the operation memory 39 to temporarily store address setting data and apparatus setting data which have been transmitted from the setting tool 213. When an image is stored, the drawing process section 312 reads the address setting data and the apparatus setting data from the operation memory 39, and transmits the address setting data and the apparatus setting data to the image storing section 313.

Upon reception of termination instruction data (command data) from the image creation tool 212, the drawing process section 312 terminates drawing of an image. When the drawing process section 312 receives termination instruction data while the image storing section 313 has not completed a storage process of storing image data yet, the drawing process section 312 draws a message which warns that an image has not been stored yet.

In a case where the image storing section 313 causes the user memory 38 to store image data in an image file upon reception of storage instruction data (command data) from the image creation tool 212, the drawing process section 312 draws a dialog box to which a file name to be given to the image file is to be written.

Upon reception of the storage instruction data, the image storing section 313 further causes the user memory 38 to store image data of an image drawn by the drawing process section 312. The image storing section 313 causes the user memory 38 to store a group of pieces of image data together with the address setting data and the apparatus setting data in an image file to which the file name is given. The image file has a file format executable by the control section 31.

The image storing section 313 creates thumbnail images in accordance with all pieces of image data contained in an image file stored in the user memory 38, and causes the user memory 38 to store the thumbnail images. Upon reception of thumbnail transmission instruction data (command data) from the image creation tool 212, the image storing section 313 reads the thumbnail images to be transmitted to the PC 2.

The operation testing section 314 tests whether or not the programmable display device 3 properly displays an image drawn by the drawing process section 312 and property operates in accordance with an operation to the image. In the test, the operation testing section 314, if necessary, (i) communicates with the PLC 5 and/or another apparatus, and/or (ii) tests output of sound and how the programmable display device 3 displays an image transmitted from outside of the programmable display device 3.

The image copying section 315 simultaneously copies, for selected programmable display devices (e.g., the programmable display devices 3A and 3B), an image file stored in the user memory 38 or specific image data contained in an image file. Specifically, the image copying section 315 instructs the data transmission and reception section 311 to transmit, to a programmable display device selected by a user via the touch panel 33, an image file or image data which is selected in the same manner as selection of the programmable display devices. The image copying section 315 further instructs the data transmission and reception section 311 to transmit, to the PC 2, an image file stored in the user memory 38 so that a backup file of the image file is created.

The following description will discuss a series of processes from creation of an image to storage of the image which are conducted by the above-configured image creation system 1.

During the series of processes, the programmable display device 3 operates in an image creation mode dedicated to an image creation function, but does not operate in a normal operation mode in which the programmable display device 3 normally operates.

In a case where a user creates a new image, the user conducts an operation for creating a base image by use of the menu/icon display region 202 of the image creation operation window 201 displayed on the monitor 25 (the display surface 25a) of the PC 2 (see Fig. 2). The operation causes (i) the image creation tool 212 to create drawing data for drawing the base image, i.e., operation data for drawing, (ii) the data transmission and reception section 211 to transmit the operation data for drawing to the programmable display device 3, (iii) the data transmission and reception section 311 of the programmable display device 3 to receive the operation data for drawing, and (iv) the drawing process section 312 to draw the base image in accordance with the operation data for drawing. Image data of the base image is loaded in the operation memory 39 or a VRAM (Video RAM) (not illustrated). The image data of the base image is also loaded in a first region of the memory 28 of the PC 2 which first region is other than a second region of the memory 28 in which second region coordinates are loaded.

That is, the memory 28 is also used to load operation data for an image.

In a case where a user creates or edits image data in accordance with image data which has been already stored in the programmable display device 3, the user selects a desired image from thumbnail images which the programmable display device 3 provides.

Specifically, first, the data transmission and reception section 211 transmits, to the programmable display device 3, first operation data for a command (thumbnail transmission instruction data) created by the image creation tool 212. When the first operation data is received by the data transmission and reception section 311 of the programmable display device 3, the image storing section 313 reads, from the user memory 38, thumbnail images which are specified by the first operation data, and then, the data transmission and reception section 311 transmits the thumbnail images to the PC 2.

The thumbnail images received by the PC 2 are displayed by the image list window in the tool region 203 of the image creation operation window 201. When one of these thumbnail images is selected, the image creation tool 212 creates second operation data for a command (reading instruction data) for causing an image corresponding to the selected thumbnail image to be displayed, and then, the second operation data is transmitted to the programmable display device 3. The drawing process section 312 of the programmable display device 3, which has received the second operation data, reads image data specified by the second operation data, and draws the image in accordance with the image data. Furthermore, the image data is transmitted to the PC 2, and loaded in the memory 28 of the PC 2, as with base image data.

In this state, i.e., in a state where the programmable display device 3 is displaying an image to be edited or created, a user conducts, by use of an input device, in the menu/icon display region 202 or the tool region 203 of the image creation operation window 201, an operation for creating or editing the image. The operation causes the image creation tool 212 to (i) add data of an object to base image data or image data which is loaded in the memory 28 of the PC 2 or (ii) change data of an object which data has been already added.

Such image data created or edited in the PC 2 is sequentially transmitted as operation data for the image to the programmable display device 3 by the data transmission and reception section 211 which is instructed by the image creation tool 212 to transmit the image data.

The operation data for the image, which has been received by the data transmission and reception section 311 of the programmable display device 3, is used in a drawing process carried out by the drawing process section 312. During the drawing process, operation data for an image, which is loaded in the operation memory 39 etc., is overwritten with the operation data for the image, which has been received by the data transmission and reception section 311. This enables the programmable display device 3 to display on the display surface 32a an updated image in which an object is placed on a base image.

As such, the drawing process section 312 draws an image in accordance with operation data for the image which operation data has been created by a user's operation and transmitted from the PC 2. In response to a user's operation to the PC 2, the drawing process section 312 sequentially draws an image on the programmable display device 3 in accordance with operation data for the image and operation data for a command. Therefore, it seems to the user as if the user operates the programmable display device 3 by use of the PC 2.

The image drawn on the display surface 32a of the programmable display device 3 is tested in terms of display and operation by the operation testing section 314. During the test, the operation testing section 314 (i) reads address setting data and apparatus setting data from the operation memory 39 in response to an operation to the image displayed on the display surface 32a, and (ii) communicates with the PLC 5 or other apparatus with reference to the read address setting data and apparatus setting data. With reference to a read address, the operation testing section 314 (i) reads or writes data from/to the memory of the PLC 5 or a memory of the other apparatus and (ii) reflects a result of such reading or writing on a display state of the image. In the test, the operation testing section further tests output of sounds (such as an alarm sound, a beep sound, and an operation sound (touch sound)) made by the programmable display device 3. Furthermore, the operation testing section 314 tests display of an image (such as a video image or a still image) transmitted to the programmable display device 3 from outside of the programmable display device 3.

The operation testing section 314 tests in the test whether or not the programmable display device 3 can operate according to design of the image (e.g., selection of an object, arrangement of a selected object, or whether or not image data functions as a program). In a case where it is found in the test that the programmable display device 3 cannot operate and display the image according to the design of the image, the image creation tool 212 modifies the image.

In a case where it is found in the test that the programmable display device 3 can operate according to the design of the image, the image storing section 313 causes the user memory 38 to store the image as part of an image file.

As such, the image creation system 1 of the present embodiment includes (i) the PC 2 including the image creation operating section 21 and (ii) the programmable display device 3 including the control section 31 that includes the sections 311 through 315. With this configuration, the PC 2 sequentially transmits, to the programmable display device 3, operation data (particularly, operation data for drawing) which can be recognized by the programmable display device 3. The programmable display device 3 draws an image on the display panel 32 in accordance with the operation data, and stores the image. Therefore, it seems to a user as if the user creates the image on the display surface 32a of the programmable display device 3 by use of the PC 2.

According to the image creation system 1 of the present embodiment, it is not necessary to (i) run a simulation, in the PC 2, for an image created by the PC 2 and (ii) transfer the image to the programmable display device 3, unlike a case where an image is created by use of conventional image creation software. Furthermore, in the image creation system 1 of the present embodiment, the programmable display device 3 displays an image which is being created. Therefore, unlike the conventional image creation software, it is not necessary to create an image in consideration of a difference in display state between an image to be displayed by the PC and an image to be displayed by the operating and display device. It is therefore possible to efficiently create an image. This ultimately makes it possible to remarkably shorten a time period required from creating image data to putting the programmable display device 3 into operation.

As has been described, timing at which the PC 2 transmits operation data to the programmable display device 3 is determined as appropriate. Therefore, by setting the timing to predetermined time intervals, it is possible to reflect, on drawing in the programmable display device 3, a state similar to a state where an object is shifting, even though it is not possible to reflect the state where the object is shifting as it is on the drawing in the programmable display device 3.

The image copying section 315 uploads, to the PC 2, an image file which is created and stored by the programmable display device 3. The PC 2 stores the image file as a backup file. This eliminates a problem that it is not possible to restore the image file due to a malfunction of the programmable display device 3. Elimination of such a problem is significant in terms of effective use of the image creation system 1 of the present embodiment. This is because the image file which is created and stored by the programmable display device 3 serves as an original image file. Furthermore, by periodically backing up an image file, it is possible to always store an updated image file in the PC 2.

Note that, as has been described, a backup file is created by the PC 2. The backup file can alternatively be created by an apparatus other than the PC 2. A modification history of an image file and a tool for managing an image file can also be created by an apparatus other than the PC 2.

The image copying section 315 simultaneously copies, for the programmable display devices 3A and 3B, an image file (data) stored in the programmable display device 3. This eliminates the need for conducting a conventional troublesome process in which, in a case where a plurality of programmable display devices use one image file, a PC has to sequentially transmit the image file to each of the plurality of programmable display devices.

As such, the image creation system of the present invention is configured so that the operating and display device operates in accordance with operation data transmitted from the operating device. Unlike so-called remote desktop, the image creation system is not configured so that a user uses a PC at hand to remotely operate a GIU or a desktop environment of another PC which is connected to the PC via a network. That is, it seems as if the operating and display device is operated by the operating device, but in fact, the operating and display device is not operated by the operating device, but the operating and display device itself (the control section 31) construes and executes an operation in accordance with operation data transmitted from the operating device.

Note that, according to the present embodiment, the image creation operating section 21 is included in the PC 2. Note, however, that the image creation operating section 21 may be included in an apparatus other than the PC 2, such as a portable terminal (e.g., a smart phone or a tablet terminal). In a case where the image creation operating section 21 is included in such a portable terminal, it is possible to, for example, modify or add image data without trouble by use of the portable terminal in a place where a programmable display device 3 is provided.

In this case, the portable terminal can be connected to the programmable display device 3 wirelessly (via wireless LAN) or via a wire (e.g., a USB). In either connection, the programmable display device 3 and the portable terminal require a common protocol. In a case where the portable terminal is connected to the programmable display device 3 via wireless LAN etc., it is necessary to create an environment in which the programmable display device 3 can wirelessly communicate with the portable terminal, for example, by providing a wireless LAN access point.

### [Embodiment 2]

The following description will discuss another embodiment of the present invention with reference to Figs. 2 through 5.

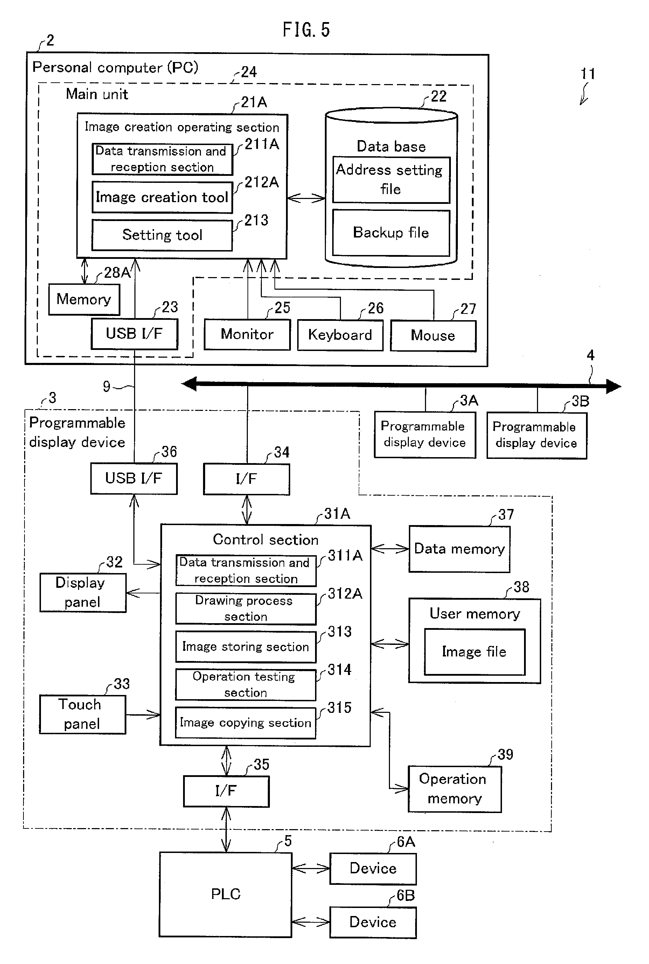

Fig. 5 is a block diagram illustrating a configuration of an image creation system 11 of Embodiment 2.

Note that identical reference numerals are given to components having functions identical to those of the components of Embodiment 1, and descriptions of such components are omitted in Embodiment 2.

As illustrated in Fig. 5, the image creation system 11 of Embodiment 2 is configured in the same manner as the image creation system 1 of Embodiment 1.

As illustrated in Fig. 5, a PC 2 of the image creation system 11 of Embodiment 2 is configured in the substantially same manner as the PC 2 of Embodiment 1 except that the PC 2 of the image creation system 11 of Embodiment 2 includes an image creation operating section 21A instead of the image creation operating section 21. The image creation operating section 21A includes a data transmission and reception section 211A and an image creation tool 212A which are different in some functions from the data transmission and reception section 211 and the image creation tool 212 of the image creation operating section 21. The PC 2 of the image creation system 11 of Embodiment 2 further includes a memory 28A instead of the memory 28. The memory 28A is identical to the memory 28 in being used to specify, by use of a mouse 27 of the PC 2, a coordinate position on a display surface 32a of a programmable display device 3. However, the memory 28A is different from the memory 28 in being not used to load operation data for an image.

The programmable display device 3 of Embodiment 2 is configured in the substantially same manner as the programmable display device 3 of Embodiment 1 except that programmable display device 3 of Embodiment 2 includes a control section 31A instead of the control section 31. The control section 31A includes a data transmission and reception section 311A and a drawing process section 312A which are different in some functions from the data transmission and reception section 311 and the drawing process section 312 of the control section 31.

The data transmission and reception section 211A, the image creation tool 212A, the data transmission and reception section 311A, and the drawing process section 312A, which are different from those of Embodiment 1, will be described below.

In response to a user's operation to the PC 2 by use of an input device (such as a keyboard 26 or the mouse 27), the image creation tool 212A (operation data creating section) creates operation data indicative of content of each operation (which has been described in Embodiment 1) conducted by use of a diagram creation function, a component image creation function, a text creation function, an edit function, and a command function. Examples of the operation data created by the image creation tool 212A include operation data for drawing, and operation data for a command (which has been described in Embodiment 1). That is, in Embodiment 2, operation data for an image is not used.

Operation data for drawing is data for, when creating or editing an image to be displayed by the programmable display device 3, drawing, in response to the each operation, all targets (such as a base image, an object, and a mouse cursor) to be displayed on the display panel 32 of the programmable display device 3. Note that the operation data for drawing is data which can be recognized by the programmable display device 3.

Specifically, the operation data for drawing is data for drawing the image, and contains (i) data for drawing the base image which serves as a background of the image and (ii) data for drawing the object to be placed on the base image. Operation data for drawing a base image is created in a case where a new image is created. The operation data for drawing the base image is created by operating, by use of the mouse 27 or the keyboard 26, a menu or an icon in a menu/icon display region 202. Operation data for drawing an object is created by (i) selecting and operating the menu or the icon by use of an input device or (ii) dragging and dropping, by use of an input device, one component image from a component image list displayed by a component image display window in a tool region 203.

The operation data for drawing also contains cursor data indicative of (i) a position of a cursor of an input device and (ii) a drag and drop operation. For example, an output signal from the mouse contains (i) coordinate data indicative of a position of the mouse and (ii) coordinate data indicative of a position at which a click operation has been conducted by the mouse.

On reception of an instruction from the image creation tool 212A, the data transmission and reception section 211A transmits, to the programmable display device 3, (i) operation data for drawing, which has been created by the image creation tool 212A or (ii) operation data for a command, which has been issued by the image creation tool 212A.

The data transmission and reception section 311A is different from the data transmission and reception section 311 of the image creation system 1 of Embodiment 1 in that the data transmission and reception section 311A receives operation data for drawing from the PC 2, whereas the data transmission and reception section 311 receives operation data for an image from the PC 2.

The drawing process section 312A draws an object on a base image in accordance with the operation data for drawing which operation data has been received by the data transmission and reception section 311A. Specifically, in the case where the new image is created, the drawing process section 312A draws the base image on the display panel 32 in accordance with the operation data for drawing the base image, the operation data having been received from the PC 2. The drawing process section 312A also draws a cursor in accordance with the operation data for drawing (cursor data of the cursor of an input device) which operation data has been created by the image creation tool 212A.

The following description will discuss how the above-configured image creation system 11 creates an image.

Note that the programmable display device 3 operates in an image creation mode (which has been described in Embodiment 1).

In a case where a user creates a new image, the user conducts an operation for creating a base image by use of the menu/icon display region 202 of an image creation operation window 201 displayed on a monitor 25 (a display surface 25a) of the PC 2. The operation causes (i) the image creation tool 212A to create operation data for drawing the base image, (ii) the data transmission and reception section 211A to transmit the operation data to the programmable display device 3, (iii) the data transmission and reception section 311A of the programmable display device 3 to receive the operation data, and (iv) the drawing process section 312A to draw the base image in accordance with the operation data.

The image creation system 11 is identical to the image creation system 1 of Embodiment 1 in that, in a case where image data which has been already stored in the programmable display device 3 is edited, a desired image is selected from thumbnail images provided by the programmable display device 3. However, the image creation system 11 is different from the image creation system 1 in that, in the image creation system 11, read image data is not transmitted to the PC 2 though the read image data is loaded in a memory 39 etc. of the programmable display device 3.

In a state where the programmable display device 3 is displaying a base image, a user conducts, by use of the mouse 27 or the keyboard 26 in the menu/icon display region 202 or the tool region 203 of the image creation operation window 201, an operation for creating or editing an image. The operation causes the image creation tool 212A to create, as operation data of the operation, operation data for drawing and operation data for a command.

In a case where the user conducts the operation for creating or editing an image, for example, in a case where the user conducts a click operation for selecting a menu or an icon, the image creation tool 212A creates operation data for drawing an object corresponding to the selected menu or icon. Alternatively, in a case where the user conducts a continuous operation such as a drag operation for dragging a component image by use of the mouse 27, the image creation tool 212A sequentially creates operation data for a command in response to the continuous operation. In a case where the user conducts an operation for shifting the mouse 27, the image creation tool 212A creates operation data for a command, as with the case where the use conducts the drag operation. These pieces of operation data thus created are transmitted to the programmable display device 3 by the data transmission and reception section 211A.

The operation data for drawing, which has been received by the data transmission and reception section 311A of the programmable display device 3, is used in a drawing process carried out by the drawing process section 312A. For example, an image, in which a new object is placed on the base image that is being displayed on the display surface 32a of the programmable display device 3, is drawn.

As such, the drawing process section 312A draws an object and a cursor in accordance with these pieces of operation data which have been transmitted from the PC 2 in response to a user's operation. It follows that the user's operation to the PC 2 is reflected on the base image displayed by the programmable display device 3. Therefore, it seems to the user as if the user operates the programmable display device 3 by use of the PC 2.

The following description will discuss in detail how the image creation system 11 creates an image, with reference to Fig. 3 and (a) and (b) of Fig. 4.
(a) and (b) of Fig. 4 are views illustrating an image which is being created and which is displayed by the programmable display device 3.

The programmable display device 3 operates in the image creation mode. The programmable display device 3, in the image creation mode, is displaying an image 301 that is being created (see Fig. 2 and (a) of Fig. 4). The image 301 is created by placing various objects on a base image 302.

In a case where a component image 303 is placed, the component image 303 is placed on the base image 302 by use of the component image creation function of the image creation tool 212A of the PC 2. Specifically, a user (i) selects a desired component image 303 from a component image window in the tool region 203 of the image creation operation window 201 (see Fig. 3) displayed on the monitor 25 of the PC 2, and (ii) drags the selected component image 303.

Such a user's drag operation for dragging the component image 303 causes a state where the component image 303 is being dragged from above to be continuously displayed on the base image 302 (see a dashed arrow illustrated in (a) of Fig. 4). In accordance with operation data which is sequentially transmitted from the PC 2 in response to the user's drag operation, the drawing process section 312A draws, together with a cursor (not illustrated), the state where the component image 303 is being dragged. By a user's drop operation for dropping the component image 303, the component image 303 is placed at a position where the component image 303 is dropped (see (b) of Fig. 4).

In a case where a quadrangle 304 (see (b) of Fig. 4) is created, a mode for creating a quadrangle is selected in advance by the image creation tool 212A. In a case where a user conducts a pointing operation by use of the mouse 27 so as to specify two points while the image creation tool 212A is in the mode, the drawing process section 312A draws, in accordance with operation data transmitted from the PC 2 in response to the user's pointing operation, (i) an apex 304a and an apex 304b (see (a) of Fig. 4), and then (ii) the quadrangle 304 (see (b) of Fig. 4).

As such, the drawing process section 312A draws the component image 303, the quadrangle 304, and the cursor in accordance with the various pieces of operation data transmitted from the PC 2 in response to user operations. It follows that the user's operations to the PC 2 are reflected on the base image 302 displayed by the programmable display device 3. Therefore, it seems to the user as if the user operates the programmable display device 3 by use of the PC 2.

An operation for drawing the quadrangle 304 is a click operation (single operation) by the mouse 27. The above-described drawing process is conducted in Embodiment 1, too. In a case where the component image 303 is drawn in accordance with an operation for placing the component image 303, a drag operation (continuous operation) carried out by the mouse 27 is also reflected on drawing in the programmable display device 3.

As with the image creation system 1 of Embodiment 1, in the image creation system 11 of Embodiment 2, an operation can be carried out as if a user creates an image on the display surface 32a of the programmable display device 3 by use of the PC 2.

According to the image creation system 11, the continuous operation is substantially faithfully drawn on the programmable display device 3. Therefore, it is possible to further improve operability.

Note that Embodiment 2 is identical to Embodiment 1 in that (i) whether operation data for drawing or operation data for a command is created is determined as appropriate and (ii) it is preferable that operation data for drawing is sequentially transmitted.

According to Embodiments 1 and 2, the memories 28 and 28A each are used to specify a coordinate position on the display surface 32a of the programmable display device 3. However, how to specify the coordinate position on the display surface 32a of the programmable display device 3 is not limited to the above.

In a case where the programmable display device 3 and the PC 2 are provided so as to adjacent to each other, it is possible to specify the coordinate position by directly operating the touch panel 33. The following description will discuss, as an example, a case where a diagram is illustrated on the display surface 32a of the programmable display device 3.

First, the PC 2 transmits, to the programmable display device 3, operation data for a command for drawing a diagram, e.g., a quadrangle. The quadrangle is drawn on the display surface 32a in accordance with the operation data. Note that it is determined in advance that, for example, a diagram drawn by the programmable display device 3 is to be drawn in the center of the display surface 32a. Therefore, the quadrangle is drawn in the center of the display surface 32a. A user (i) selects the quadrangle by pressing with a user's finger a position of the touch panel 33 which position corresponds to the drawn quadrangle, (ii) shifts the finger to a desired position while pressing, and then (iii) leaves the finger from the touch panel 33. This makes it possible to place the quadrangle at the desired position. A user can increase or decrease the size of the quadrangle, for example, by conducting a so-called pinch-out or pinch-in operation.

The drawing process sections 312 and 312A conduct the above-described drawing process, an operation for shifting a quadrangle (object), and an operation for increasing or decreasing the size of a quadrangle (object).

### [Additional Description]

Embodiments 1 and 2 each have described a case where the PC 2 includes the image creation operating section 21 or 21A which causes the PC 2 to operate as an operating device, i.e., a case where a program which causes the image creation operating section 21 or 21A to operate is installed in advance on the PC 2. However, Embodiments 1 and 2 are not limited to the case. An application program which causes the image creation operating section 21 or 21A to operate may be downloaded from a cloud server to the PC 2 by means of so-called cloud computing.

In a case where this application program is configured to recognize a data format of the programmable display device 3, it is unnecessary to convert data when the programmable display device 3 and the PC 2 exchange the data with each other.

Note that the program can also be implemented in the form of a data signal embedded in a carrier wave which is embodied by electronic transmission.

The image creation system of the preset embodiment can also be described as below.

The image creation system is configured to include an operating device and an operating and display device and to create image data of an image to be displayed by the operating and display device, the operating device including: an operation data creating section which, when an operation is conducted, creates operation data indicative of content of the operation; and a data transmission section which transmits, to the operating and display device, the operation data whose data format is compatible with the operating and display device, and the operating and display device including a control section which causes the operating and display device to draw the image in accordance with the operation data received by the operating and display device.

According to the configuration, when an operation is conducted, (i) the operation data creating section of the operating device creates operation data of the operation, (ii) the data transmission section of the operating device transmits the operation data to the operating and display device, and (iii) the control section of the operating and display device causes a display section to draw an image in accordance with the operation data received by the operating and display device.

According to the configuration, upon reception of operation data from the operating device, the operating and display device draws an image based on the operation data. Therefore, it seems to a user as if the operating device causes the operating and display device to create the image data. It is therefore possible to create image data of an image to be displayed by the operating and display device while the image data is being displayed by the operating and display device. This eliminates the need for transferring created image data to the operating and display device, unlike a case where image data is created by means of conventional image creation software. Moreover, the operating and display device displays an image which is being created. This eliminates the need for creating an image in consideration of a difference in display state between an image to be displayed by the operating device and an image to be displayed by the operating and display device, unlike the conventional image creation software. It is therefore possible to efficiently create an image. This ultimately makes it possible to remarkably shorten a time period required from creating an image to putting the operating and display device into operation.

It is preferable to configure the image creation system so that the operation is an operation for creating the image data, and the operating device creates, as the operation data, (i) operation data for the image which operation data is created as the image data by the operation, and (i) operation data for a command which is related to an operation of the operating and display device, the operation data being given to the operating and display device.

According to the configuration, upon reception of operation data for an image (image data) or operation data for a command from the operating device, the operating and display device draws an image based on the operation data. It is therefore possible to sequentially reflect, on drawing of each image by the operating and display device, an operation to the operating device.

Alternatively, it is preferable to configure the image creation system so that the operating device creates, as the operation data, (i) operation data for drawing in accordance with which operation data the operating and display device draws the image, and (ii) operation data for a command which is related to an operation of the operating and display device, the operation data being given to the operating and display device.

According to the configuration, upon reception of operation data for drawing or operation data for a command from the operating device, the operating and display device draws an image based on the operation data. The operation data for drawing is operation data in accordance with which the operating and display device draws the image. Therefore, unlike the above image data, operation data for drawing is not necessarily created for each image. It is therefore possible to sequentially reflect, on drawing of each target (e.g., each object) to be drawn by the operating and display device, an operation to the operating device.

It is preferable to configure the image creation system so that the data transmission section intermittently transmits the operation data for the command.

According to the configuration, the data transmission section intermittently transmits operation data for a command which operation data is not directly associated with drawing of an image. It is therefore possible to reduce data communication amount.

The present invention is not limited to the description of the embodiments above, and can therefore be modified by a skilled person in the art within the scope of the claims. Namely, an embodiment derived from a proper combination of technical means disclosed in different embodiments is encompassed in the technical scope of the present invention.

### Industrial Applicability

The present invention is suitably applicable to creation of an image to be displayed by an operating and display device such as a programmable display device.

### Reference Signs List

1 and 11: Image creation system
2: Personal computer (operating device)
3: Programmable display device (operating and display device)
3A and 3B: Programmable display device
21 and 21A: Image creation operating section
31 and 31A: Control section
32: Display panel
211 and 211A: Data transmission and reception section (data transmission section)
212 and 212A: Image creation tool (operation data creating section)
311 and 311A: Data transmission and reception section
312 and 312A: Drawing process section

## Claims

1. An image creation system, comprising an operating device and an operating and display device, and being configured to create image data of an image to be displayed by the operating and display device, the image creation system being **characterized in that**
the operating device includes:
an operation data creating section which, when an operation is conducted, creates operation data indicative of content of the operation; and
a data transmission section which transmits, to the operating and display device, the operation data whose data format is compatible with the operating and display device, and
the operating and display device includes a control section which causes the operating and display device to draw the image in accordance with the operation data received by the operating and display device.

2. The image creation system as set forth in claim 1, wherein the operation is an operation for creating the image data, and
the operating device creates, as the operation data, (i) operation data for the image which operation data is created as the image data by the operation, and (ii) operation data for a command which is related to an operation of the operating and display device, the operation data being given to the operating and display device.

3. The image creation system as set forth in claim 1, wherein the operating device creates, as the operation data, (i) operation data for drawing in accordance with which operation data the operating and display device draws the image, and (ii) operation data for a command which is related to an operation of the operating and display device, the operation data being given to the operating and display device.

4. The image creation system as set forth in claim 2 or 3, wherein the data transmission section intermittently transmits the operation data for the command.
